# EUROPÄISCHE PATENTSCHRIFT

(11) **EP 2 897 832 B1**
(45) Veröffentlichungstag und Bekanntmachung des Hinweises auf die Patenterteilung: **23.11.2016**
(21) Anmeldenummer: 13805220.4
(22) Anmeldetag: 24.09.2013
(51) Int. Cl.: B60L 11/12

(54) **SPANNUNGSVERSORGUNGS- UND ANTRIEBSSYSTEM FÜR EIN FEUERWEHR- ODER RETTUNGSFAHRZEUG ODER SONDERNUTZFAHRZEUG SOWIE VERFAHREN ZUR STEUERUNG DESSELBEN**
VOLTAGE SUPPLY AND DRIVE SYSTEM FOR A FIRE SERVICE VEHICLE OR RESCUE VEHICLE OR SPECIAL UTILITY VEHICLE AND METHOD FOR CONTROLLING SAME
SYSTÈME D'ALIMENTATION EN TENSION ET D'ENTRAÎNEMENT POUR UN VÉHICULE D'INCENDIE OU DE SAUVETAGE OU AUTRE VÉHICULE UTILITAIRE SPÉCIAL, AINSI QUE PROCÉDÉ DE COMMANDE DE CE SYSTÈME

(30) Priorität: 24.09.2012 AT 10382012
(43) Veröffentlichungstag der Anmeldung: 29.07.2015
(73) Patentinhaber: Rosenbauer International AG, 4060 Leonding (AT)
(72) Erfinder: BRUNBAUER, Gottfried, A-4421 Aschach/Steyr (AT)
(74) Vertreter: Burger, Hannes
(86) Internationale Anmeldenummer: PCT/AT2013/050194
(87) Internationale Veröffentlichungsnummer: WO 2014/043734

(56) Entgegenhaltungen:
- US-A1- 2004 024 502
- US-A1- 2009 194 067
- US-A1- 2009 312 899

## Beschreibung

Die Erfindung betrifft ein Spannungsversorgungs- und Antriebssystem für ein Feuerwehr- oder Rettungsfahrzeug oder Sondernutzfahrzeug mit zumindest einer Antriebsquelle und mit mehreren Spannungsquellen die über ein elektrisches Leitungsnetz miteinander verbunden sind und einer Steuervorrichtung, wobei zumindest eine der Spannungsquellen durch eine Batterie gebildet ist, dadurch gekennzeichnet, dass die Steuervorrichtung zur Zu- und Wegschaltung einer oder mehrerer Spannungsquellen und/oder einer oder mehrerer Antriebsquellen unter Berücksichtigung zumindest eines Emissionswertes zumindest einer der Spannungsquellen und/oder zumindest einer der Antriebsquelle ausgebildet ist.

Die Erfindung betrifft ebenso ein Verfahren zur Steuerung eines Spannungsversorgungs- und Antriebssystem für ein Feuerwehr- oder Rettungsfahrzeug oder Sondernutzfahrzeug.

Die Erfindung betrifft weiters ein Spannungsversorgungssystem für ein Feuerwehr- oder Rettungsfahrzeug oder Sondernutzfahrzeug mit mehreren Spannungsquellen die über ein elektrisches Leitungsnetz miteinander und mit einer Verbraucherschnittstelle verbunden sind und einer Steuervorrichtung und einer Spannungsmessvorrichtung, wobei zumindest eine der Spannungsquellen durch eine mit einem Fahrmotor antriebsverbundene Lichtmaschine gebildet ist.

Die Erfindung betrifft weiters ein Verfahren zur Steuerung eines Spannungsversorgungssystems.

Die US 2009194067 A1 zeigt ein Energieverwaltungssystem für ein Service Packet. Dieses Service Packet beinhaltet einen Service Motor und je nach Ausführungsbeispiel weitere Komponenten wie Luftfilter oder Kühler. Dieses Service Pack ist fix im Arbeitsfahrzeug verbaut. Ebenso ist eine Spannungsmessvorrichtung und eine Steuerung des Service Packs abhängig von dieser Spannungsmessung gezeigt.

Aus der US 2011006603A1 ist ein Verfahren zum Betrieb eines Energieverwaltungssystems bekannt. Mit diesen Verfahren kann ein Netzwerk von Energiequellen und Verbrauchern aufgebaut werden.

Aus der US 2011146621 AA ist bereits ein Leerlauf-Reduktionssystem für Feuerwehr- oder Rettungsfahrzeug bekannt. Bei der darin offenbarten Ausführungsform ist nachteilig, dass ein zusätzlicher fix im Fahrzeug eingebauter Generator nötig ist.

Die Aufgabe der Erfindung ist es nun durch einen optimal kombinierten Betrieb von Spannungsquellen und/oder Antriebsquellen minimale Emissionswerte sicherzustellen.

Diese Aufgabe wird mit einer Vorrichtung der eingangs genannten Art erfindungsgemäß dadurch gelöst, dass die Steuervorrichtung zur Zu- und Wegschaltung einer oder mehrerer Spannungsquellen und/oder einer oder mehrerer Antriebsquellen unter Berücksichtigung zumindest eines Emissionswertes zumindest einer der Spannungsquellen und/oder zumindest einer der Antriebsquelle ausgebildet ist.

Die erfindungsgemäße Lösung ermöglicht, dass die im Spannungsversorgungs- und Antriebssystem des Feuerwehr- und Rettungsfahrzeuges oder Sondernutzfahrzeuges eingebundenen Spannungs- und/oder Antriebsquellen so kombiniert betrieben werden, dass ein minimaler Gesamtemissionswert erreicht werden kann.

Die Aufgabe wird weiters mit einem Verfahren der eingangs genannten Art erfindungsgemäß dadurch gelöst, dass eine Auswahl einer Spannungsquelle zum Betrieb eines Verbrauchers und/oder der Antriebsquelle und die Ein-, Zu- und Wegschaltung einer Spannungsquelle und/oder einer Antriebsquelle durch eine Steuervorrichtung unter Berücksichtigung zumindest jeweils eines Emissionswertes der Spannungsquelle und/oder der Antriebsquelle erfolgt.

Diese weitere erfindungsgemäße Lösung ermöglicht es, Spannungsquellen oder Antriebsquellen so ein- zu oder wegzuschalten, dass die hinsichtlich des gewünschten Emissionswertes günstigste oder günstigsten zu- oder eingeschaltet werden können.

Die Aufgabe wird darüber hinaus mit einem Verfahren der eingangs genannten Art erfindungsgemäß umfassend folgende Schritte gelöst:
- Ermittlung eines Leistungsbedarfs und/oder Spannungsbedarfes
- Ermittlung oder Aufruf von Emissionswerten der Spannungsquellen 3 und/oder der Antriebsquellen
- Berechnung der Summe der Emissionswerte von Kombinationen von Spannungsquellen und/oder der Antriebsquellen je Emissionsart
- Ermittlung jener Kombination von Spannungsquellen und/oder Antriebsquellen welche hinsichtlich einer Emissionsart die kleinste Summe der Emissionswerte ergibt
- einschalten, zuschalten oder wegschalten von Spannungsquellen und/oder der Antriebsquellen entsprechend der zuvor ermittelten Kombination von Spannungsquellen und/oder Antriebsquellen abhängig von einem Betriebsmodus

Durch diese weitere erfindungsgemäße Lösung ist es möglich eine im Hinblick auf den gewählten Betriebsmodus und Emissionsarten emissionswertoptimierte Kombination von Spannungsquellen und/oder Antriebsquellen zu errechnen und diese dann so zu betreiben. Dadurch können unnötige Emissionen vermieden werden.

Eine vorteilhafte Variante der Erfindung sieht vor, dass die Steuervorrichtung zur Zu- und Wegschaltung einer oder mehrerer Spannungsquellen oder Antriebsquellen unter Berücksichtigung zumindest eines in einem Speicher hinterlegten Emissionswertes ausgebildet ist. Dadurch kann eine laufende Messung und Berechnung der Emissionswerte unterbleiben.

Weiters kann vorgesehen sein, dass die Steuervorrichtung zur Zu- und Wegschaltung einer oder mehrerer Spannungsquellen und/oder Antriebsquellen unter Berücksichtigung zumindest eines von einem Emissionssensor ermittelten Emissionswertes ausgebildet ist. Dies bringt den Vorteil, dass aktuelle Emissionswerte verwendet werden können und so eine noch präzisere Steuerung ermöglicht wird.

Gemäß einer weiteren Ausführungsform der Erfindung kann der Emissionssensor zur Messung zumindest einer der Emissionsarten wie Lärm, Kohlenstoffmonoxid, Kohlenstoffdioxid, Feinstaub, Ruß, Schwefeldioxid, Stickoxid, Benzol, Methan, Wärme und Rauch ausgebildet sein um so vorteihafterweise viele unterschiedliche Emissionen berücksichtigbar zu machen.

Eine besonders vorteilhafte Variante der Erfindung, welche zumindest einen Sensor zur Ermittlung von Betriebsumgebungsbedingungen vorsieht bringt den Vorteil, dass das Einsatzumfeld bei der Steuerung mitberücksichtigt werden kann.

Eine ebenfalls vorteilhafte Weiterbildung der Erfindung ist dadurch gegeben, dass zumindest ein geographisches Positionserkennungssystem zur Ermittlung der Betriebsumgebung vorgesehen ist. Durch dieses System können bereits vorhandene Daten zur Betriebsumgebung genutzt werden.

Eine besonders günstige Variante der Erfindung sieht vor, dass die Steuervorrichtung zur Zu- und Wegschaltung einer oder mehrerer Spannungsquellen und/oder Antriebsquellen abhängig von einem Betriebsmodus ausgebildet ist. Dadurch ist es möglich die Strom- und/oder Antriebsversorgung optimal auf die Einsatzbedürfnisse abzustimmen.

Eine weitere sehr vorteilhafte Variante der Erfindung sieht vor, dass die Steuervorrichtung zur Zu- und Wegschaltung einer oder mehrerer Spannungsquellen und/oder Antriebsquellen abhängig von den Betriebsumgebungsbedingungen ausgebildet ist. So können für die Auswahl der betriebenen Spannungs- und /oder Antriebsquellen auch äußere Einflüsse, insbesondere Gefahren, mitberücksichtigt werden.

Um üblicherweise ohnehin mitgeführte flexibel einsetzbare Geräte auch zur Spannungsversorgung zu nutzen kann zumindest eine weitere Spannungsquelle durch einen aus dem Feuerwehr- oder Rettungsfahrzeug oder Sondernutzfahrzeug entnehmbaren und unabhängig von dem elektrischen Leitungsnetz betreibbaren Stromerzeuger gebildet sein.

Einen besonderen Vorteil bringt, dass ein weiterer Fahrmotor zum Antrieb des Feuerwehr- oder Rettungsfahrzeug in diesem angeordnet ist. Dadurch wird es möglich das Feuerwehr- oder Rettungsfahrzeug oder Sondernutzfahrzeug besonders emissionseffizent fortzubewegen, da nicht benötigte Fahrmotoren weggeschaltet werden können und so insbesondere Abgase und Lärm reduziert wird.

Ein Vorteil ist wenn zumindest ein weiterer Fahrmotor durch eine Verbrennungskraftmaschine oder durch einen Elektromotor gebildet ist. Je nach Leistungsanforderung und Einsatzdauer steht so das optimale Zusatzaggregat zur Verfügung.

Bei Anordnung des Emissionssensors an dem Stromerzeuger, kann vorteilhafterweise direkt bei der Emissionsquelle gemessen werden.

Gemäß einer weiteren vorteilhaften Variante des erfindungsgemäßen Verfahrens kann der zumindest eine Emissionswert im Speicher hinterlegt werden und durch die Steuervorrichtung abgefragt werden. Ein schneller Zugriff auf die Daten zur Berechnung kann damit sichergestellt werden.

Eine flexible Verfahrensvariante lässt sich dadurch realisieren, dass der zumindest eine Emissionswert von einem Emissionssensor ermittelt und an die Steuervorrichtung übertragen wird.

Das erfindungsgemäße Verfahren kann auch vorsehen, dass die Steuervorrichtung die Spannungsquellen oder Antriebsquellen aus mehreren Spannungsquellen oder Antriebsquellen so kombiniert und einschaltet, zuschaltet oder wegschaltet, dass die Summe der Emissionswerte aller zugeschalteten Spannungsquellen und/oder Antriebsquellen für die benötigte Leistung minimal ist. Damit kann das System laufend optimal an die Anforderungen angepasst werden.

In einer weiteren vorteilhaften Fortbildung des erfindungsgemäßen Verfahrens kann die Steuervorrichtung abhängig von einem wählbaren oder ermittelten Betriebsmodus die Spannungsquellen oder Antriebsquellen aus mehreren Spannungsquellen oder Antriebsquellen so kombinieren und einschalten, zuschalten oder wegschalten, dass die Summe der Emissionswerte aller zugeschalteten Spannungsquellen und/oder Antriebsquellen hinsichtlich zumindest einer Emissionsart wie beispielsweise Lärm, Kohlenstoffmonoxid, Kohlenstoffdioxid, Feinstaub, Ruß, Schwefeldioxid, Stickoxid, Wärme oder Rauch für die benötigte Leistung und/oder zu erwartende Leistungsanforderung minimal ist. So kann ein den Anforderungen besonders angepasster Einsatz des Feuerwehr- oder Rettungsfahrzeuges oder Sondernutzfahrzeuges erfolgen.

Die Aufgabe der Erfindung ist es auch, einen optimierten Einsatz mehrerer oder einzelner Spannungsquellen zur Spannungsversorgung eines Leitungsnetzes in einem Feuerwehr- oder Rettungsfahrzeug zu erzielen.

Diese Aufgabe kann mit einer Vorrichtung der genannten Art erfindungsgemäß dadurch gelöst, dass zumindest eine weitere Spannungsquelle durch einen mobilen und unabhängig von dem elektrischen Leitungsnetz betreibbaren Stromerzeuger gebildet ist, das elektrische Leitungsnetz durch eine Kuppelstelle mit dem mobilen Stromerzeuger lösbar verbindbar ist, und das die Steuervorrichtung zur Zu- und Wegschaltung einer oder mehrerer Spannungsquellen unter Berücksichtigung einer laufenden Messung der Spannung durch die Spannungsmessvorrichtung ausgebildet ist.

Die erfindungsgemäße Lösung erlaubt es, dass sämtliche oder einzelne Spannungsquellen, die ohnehin typischer Weise in einem Feuerwehr- oder Rettungsfahrzeug mitgeführt werden, so auch mobile und unabhängig betreibbare Stromerzeuger, das Spannungsversorgungssystem mit Strom und Spannung versorgen können.

Die Aufgabe kann weiters mit einem Verfahren der eingangs genannten Art erfindungsgemäß dadurch gelöst, dass die Auswahl einer Spannungsquelle zum Betrieb eines Verbrauchers und die Zu- und Wegschaltung einer oder mehrerer Spannungsquellen durch die Steuervorrichtung unter Berücksichtigung einer laufenden Messung der Spannung durch die Spannungsmessvorrichtung erfolgt. Ein weiterer Vorteil liegt darin , dass moderne umweltschonende Fahrmotoren in Feuerwehr- oder Rettungsfahrzeug bei zu langen Leerlaufzeiten und der damit verbundenen zu geringen Betriebstemperatur verrußen und so mit einer Reduktion dieser Leerlaufzeiten ein kostspieliges und umweltverschmutzendes Ausbrennen der Fahrmotoren unterbleiben kann.

Diese weitere mögliche erfindungsgemäße Lösung ermöglicht es, eine Auswahl einzelner Spannungsquellen, basierend auf Messwerten, zu treffen um das Spannungsversorgungssystem effizient betreiben zu können.

Eine vorteilhafte Variante der Erfindung sieht vor, dass eine Spannungsquelle durch die Steuervorrichtung mit einem Verbraucher über die Verbraucherschnittstelle verbindbar ist. Gemäß dieser Variante der Erfindung können auch Informationen und Steuersignale direkt mit dem Verbraucher ausgetauscht werden um so einen noch effizienteren Betrieb zu ermöglichen.

Weiters kann vorgesehen sein, dass mehrere Spannungsquellen durch die Steuervorrichtung mit einem oder mehreren Verbrauchern über die eine oder mehrere Verbraucherschnittstelle verbindbar sind. Dies hat den Vorteil, dass selektive Verbindungen zwischen einem Verbraucher und einer Spannungsquelle bzw. einer Gruppe von Verbraucher und einer Gruppe von Spannungsquellen hergestellt werden können und so zum Beispiel unterschiedliche Spannungen durch das Spannungsversorgungssystem gleichzeitig den jeweiligen Verbrauchern zur Verfügung gestellt werden können und wiederum eine effiziente Auswahl erfolgen kann.

Gemäß einer weiteren Ausführungsform der Erfindung kann das Spannungsversorgungssystem ausschließlich von dem mobilen Stromerzeuger als Spannungsquelle versorgt werden. Mobile Stromerzeuger gehören zur Standardausrüstung von Feuerwehr- oder Rettungsfahrzeugen, es ist daher kein weiterer gesonderter Stromerzeuger mitzuführen, was vorteilhafter Weise zu Gewichtseinsparungen führt und bei geringem Strombedarf einen effizienteren Betrieb ermöglicht.

Eine weitere sehr vorteilhafte Ausführungsform der Erfindung sieht vor, dass das Spannungsversorgungssystem gleichzeitig durch den mobilen Stromerzeuger und durch die Lichtmaschine als Spannungsquellen versorgt ist. Vorteilhaft dabei ist, dass das gesamte verfügbare Potential an Leistung der Spannungsquellen für besondere Betriebszustände ausgenutzt werden kann.

Eine besonders günstige Variante der Erfindung, welche sich durch eine weitreichende Einsetzbarkeit von externen Werkzeugen auszeichnet, sieht vor, dass zumindest eine Spannungsquelle zur Abgabe von 230 Volt und 400 Volt oder 120 Volt Spannung ausgebildet ist.

Eine ebenfalls sehr vorteilhafte Weiterbildung der erfindungsgemäßen Vorrichtung sieht vor, dass zumindest eine Spannungsquelle gemeinsam mit einem Batterieladegerät oder ohne eines kann auch das klassische elektrische Bordnetz eines Feuerwehr- oder Rettungsfahrzeuges in das Spannungsversorgungssystem integriert und auch die Batteriespannung zum Beispiel ohne Einsatz des Fahrmotors erhalten werden.

Eine besonders günstige Variante, welche größtmögliche Flexibilität in der Kombination von unterschiedlichen Leistungsklassen von Stromerzeugern ermöglicht, sieht vor, dass der mobile Stromerzeuger einen diesel-, benzin- oder gasbetriebenen Antrieb aufweist, der mit einem Generator antriebsverbunden ist.

Eine weitere Ausführungsform der Erfindung sieht vor, der mobile Stromerzeuger eine Brennstoffzelle ist. Vorteilhaft ist dabei, dass eine Brennstoffzelle auch in abgassensiblen Bereichen eingesetzt werden kann.

Bei besonders beengten Platzverhältnissen, gerade in kleineren Feuerwehr- oder Rettungsfahrzeugen, kann erfindungsgemäß ein weiteren Stromerzeuger dadurch integriert werden, dass der mobile Stromerzeuger durch einen Antrieb einer Tragkraftspritze und einem antriebsverbundenen Generator gebildet ist.

Ein besonders sicherer Betrieb eines im Feuerwehr- oder Rettungsfahrzeug untergebrachten Stromerzeugers lässt sich dadurch realisieren, dass der mobile Stromerzeuger in einer verschließbaren Aufnahme im Feuerwehr- oder Rettungsfahrzeug untergebracht ist.

Eine sehr vorteilhafte Weiterbildung der Erfindung sieht vor, dass die verschließbare Aufnahme einen Verschlusssensor aufweist. Dadurch ist es möglich die Voraussetzung für einen sicheren Betrieb vor Inbetriebnahme des Stromerzeugers abzuklären.

Eine Ausführungsform des Spannungsversorgungssystems, welche sich dadurch auszeichnet, dass der Verschlusssensor zur Abgabe eines Unterbrechungssignals an die Steuervorrichtung ausgebildet ist, wobei durch das Unterbrechungssignal der Betrieb des mobilen Stromerzeugers verhindert ist. Eine unbeabsichtigte Inbetriebnahme, in einem nicht dafür vorgesehen Schließzustand, kann dadurch verhindert werden.

Gemäß einer Variante der Erfindung, welche sich dadurch auszeichnet, dass die verschließbare Aufnahme eine Kühlvorrichtung, eine Abgasableitungsvorrichtung und eine Luftzuführvorrichtung aufweist, kann auch ein Betrieb des Stromerzeugers im geschlossenen Zustand der Aufnahme erfolgen.

Eine weitere Variante der Erfindung sieht vor, dass zumindest eine Spannungsquelle durch einen elektrischen Pufferspeicher gebildet ist. Vorteilhaft dabei ist, dass große Mengen an elektrischer Energie kurzfristig zwischengespeichert werden können um Booster-Effekte realisieren zu können.

Eine besonders vorteilhafte weil umweltfreundliche Ausführungsform der Erfindung sieht vor, dass zumindest eine Spannungsquelle 3 durch eine photovoltaische Energiegewinnungsvorrichtung 36 gebildet ist.

Eine weitere Ausführungsform der Erfindung, welche bei Großeinsätzen ein Maximum an Versorgungssicherheit und Effizienz gewährleistet, besteht darin, dass das Spannungsversorgungssystem mit einem oder mehreren Spannungsversorgungssystem eines oder mehrerer weiterer Feuerwehr- oder Rettungsfahrzeug lösbar verbindbar ist.

Gemäß einer weiteren sehr vorteilhaften Variante des erfindungsgemäßen Verfahrens kann die Auswahl einer Spannungsquelle zum Betrieb eines Verbrauchers und die Zu- und Wegschaltung einer Spannungsquelle durch die Steuervorrichtung unter Berücksichtigung einer laufenden Messung der Spannung durch die Spannungsmessvorrichtung und unter Berücksichtigung der benötigten Leistung erfolgen. Durch die Berücksichtigung der benötigten Leistung lassen sich Spannungsversorgungsengpässe im Vorhinein vermeiden.

Eine flexible Steuerung im Betrieb lässt sich gemäß einer weiteren vorteilhaften Verfahrensvariante dadurch sicherstellen, dass die Spannungsquelle, der Verbraucher und die Steuervorrichtung über Bus-Signale, gesteuert werden.

Das erfindungsgemäße Verfahren kann auch vorsehen, dass der mobile Stromerzeuger nur dann betrieben werden kann, wenn der Verschlusssensor der verschließbaren Aufnahme der Steuervorrichtung bestätigt, dass die verschließbare Aufnahme geöffnet ist. Dadurch kann ein sicherer Betrieb gewährleistet und eine Überhitzung sowie ein Abgasstau vermieden werden.

Zum besseren Verständnis der Erfindung wird diese anhand der nachfolgenden Figuren näher erläutert.

Es zeigen jeweils in stark schematisch vereinfachter Darstellung:
- Fig. 1: schematische Darstellung eines Spannungsversorgungssystems in einem Feuerwehr- oder Rettungsfahrzeug;
- Fig. 2: schematischer Schaltplan eines Spannungsversorgungssystems;
- Fig. 3: schematische Darstellung eines Spannungsversorgungs- und Antriebssystems in einem Feuerwehr- oder Rettungsfahrzeug oder Sondernutzfahrzeug;
- Fig. 4: schematischer Schaltplan eines Spannungsversorgungs- und Antriebssystems
- Fig. 5: schematische Darstellung eines Antriebssystems in einem Feuerwehr- oder Rettungsfahrzeug oder Sondernutzfahrzeug.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

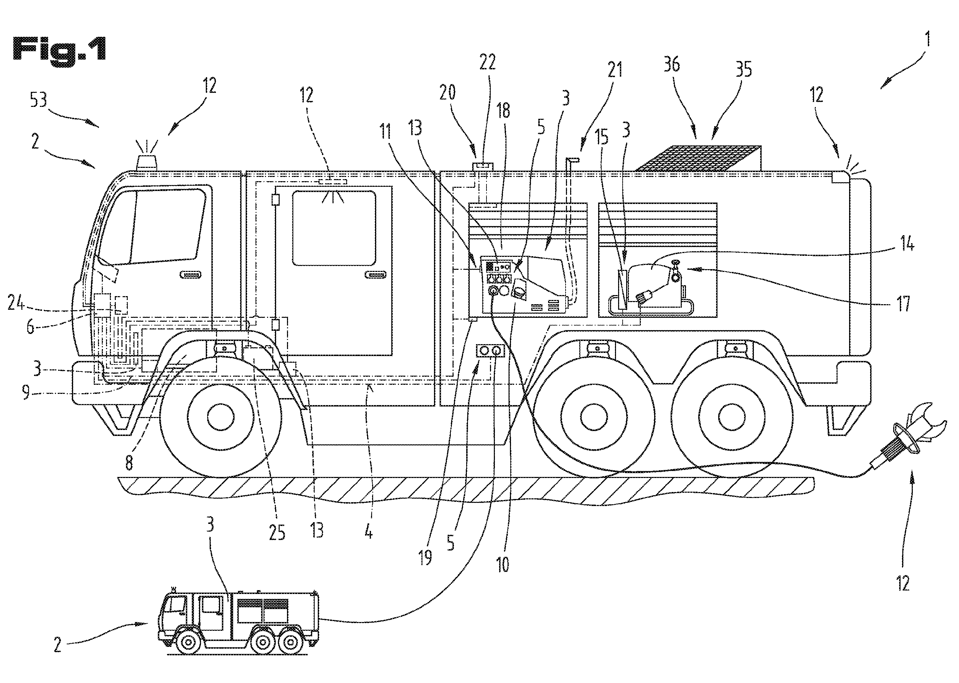

Gemäß Fig. 1 weist ein erfindungsgemäßes Spannungsversorgungssystem 50 für eine Feuerwehr- oder Rettungsfahrzeug 2 mehrere Spannungsquellen auf die über ein elektrisches Leitungsnetz 4 miteinander und mit einer oder mehreren Verbraucherschnittstelle 5 verbunden sind.

Unter einer Verbraucherschnittstelle 5 ist jegliche, zur Stromführung geeignete, Anbindung des Spannungsversorgungssystems 1 an einen elektrischen Verbraucher 12 zu verstehen. Diese Anbindung kann beispielsweise über direkte Leitungsverbindungen, Klemm- oder Kuppelstellen, lösbare Verbindungen, Steckverbindungen, über elektrische oder elektronische Schaltungen oder induktive Verbindung hergestellt sein.

Weiters umfasst das Spannungsversorgungssystem 50 eine Steuervorrichtung 6, welche beispielsweise durch eine elektrische, elektronische oder eine einen Mikroprozessor aufweisende Steuerung gebildet sein kann. Eine solche Vorrichtung kann beispielsweise Steuerbefehle ausführen die manuell, aufgrund von in einem oder in mehreren elektronischen Speichern 24 hinterlegten Auslösewerten oder aufgrund logischer Programmierung ausgelöst werden.

Weiters ist eine Spannungsmessvorrichtung 7 angeordnet, wobei zumindest eine der Spannungsquellen 3 durch eine mit einem Fahrmotor 8 antriebsverbundene Lichtmaschine 9 gebildet ist.

Unter Spannungsquelle 3 ist jegliches Gerät zu verstehen, welches zur Erzeugung bzw. Aufrechterhaltung einer Spannung im Spannungsversorgungssystem dienen kann. Insbesondere sind Stromerzeugungs- wie auch Stromspeicherquellen davon mit umfasst, wie zum Beispiel Batterien, Kondensatoren, externe Stromnetze, diesel- benzin- oder gasbetriebene Generatoren, Lichtmaschinen, mit anderen Geräten antriebsverbundene Generatoren sowie alle Arten von Brennstoffzellen oder chemischen Energiequellen, Thermoelemente, sowie wind- oder wasserkraftbetriebene Generatoren, Photovoltaikanlagen, wie beispielsweise Solarzellen und auch externe Energieversorgungsnetze.

Das Spannungsversorgungssystem 50 umfasst zumindest eine weitere Spannungsquelle 3, die durch einen mobilen und unabhängig von dem elektrischen Leitungsnetz 4 betreibbaren Stromerzeuger 10 gebildet ist.

Das elektrische Leitungsnetz 4 ist durch eine Kuppelstelle11 mit dem mobilen Stromerzeuger 10 lösbar verbindbar.

Unter dem Begriff Kuppelstelle ist zum Beispiel eine Vorrichtung zu verstehen, welche eine Verbindung eines Verbrauchers 12 oder einer Spannungsquelle 3 oder eines weiteren Spannungsversorgungssystems 1 mit dem elektrischen Leitungsnetz 4 des Feuerwehr- oder Rettungsfahrzeugs ermöglicht. Diese Kupplungsstelle kann insbesondere eine elektrische Verbindung zum elektrischen Leitungsnetz über beispielsweise mechanische, magnetische Verbindung ermöglichen. Eine mechanische Kuppelstelle kann insbesondere über eine Steckdosen- Steckerverbindung kraft- und/oder formschlüssig hergestellt werden.

Unter einem mobilen Stromerzeuger 10 versteht man eine Vorrichtung zur Erzeugung von Strom, welche aus dem Feuerwehr- oder Rettungsfahrzeug entnommen werden kann und unabhängig von diesem betreibbar ist. Beispielsweise sind das mit diesel- benzin- oder gasbetriebenen Antrieben gekoppelte Generatoren, sowohl turbinen- wie auch kolbenmotorbetriebe, Brennstoffzellen oder auch Photovoltaikanlagen, wie beispielsweise Solarzellen.

Die Steuervorrichtung 6 ist zur Zu- und Wegschaltung einer oder mehrerer Spannungsquellen 3 unter Berücksichtigung einer laufenden Messung der Spannung durch die Spannungsmessvorrichtung 7 ausgebildet.

Unter einer Zu- und Wegschaltung einer oder mehrerer Spannungsquellen ist eine von der Steuervorrichtung 6 ausgehende Unterbrechung oder Herstellung der elektrischen Verbindung zum elektrischen Leitungsnetz sowie beispielsweise auch eine Ein- oder Ausschaltung bzw. ein Start oder eine Abschaltung einer Spannungsquelle 3 und/oder eines Verbrauchers 12 zu verstehen, wobei die Befehle manuell oder aufgrund von in einem oder mehreren Speichern 24 hinterlegten Soll-Werten automatisch erfolgen.

Der mobile Stromerzeuger 10 kann beispielsweise einen diesel-, benzin- oder gasbetriebenen Antrieb 14 aufweisen, der mit einem Generator 15 antriebsverbunden sein kann.

Ebenso kann der mobile Stromerzeuger 10 beispielsweise durch einen Antrieb 14 einer Tragkraftspritze 17 und einem antriebsverbundenen Generator 15 gebildet sein.

Der mobile Stromerzeuger 10 kann zum Beispiel in einer verschließbaren Aufnahme 18 im Feuerwehr- oder Rettungsfahrzeug 2 untergebracht sein. Der mobile Stromerzeuger 10 kann dabei insbesondere drehbar gelagert montiert, auf Schienen geführt, durch Befestigungsmittel lösbar verbindbar gehalten, aufgehängt oder ausziehbar befestigt sein. Die Kuppelstelle 11 kann dabei so ausgeführt sein, dass alle stromführenden elektrischen Verbindungen, wie auch die Steuerleitungen beim Entfernen des mobilen Stromerzeugers 10 automatisch getrennt werden oder aber über eine Verlängerung, wie beispielsweise ein Verlängerungskabel, weiter mit dem Spannungsversorgungssystem 50 verbunden bleiben.

Die verschließbare Aufnahme 18 kann bevorzugter Weise einen Verschlusssensor 19 aufweisen. Ein solcher Verschlusssensor 19 kann beispielsweise optisch, optoelektronisch, magnetisch, mechanisch, elektrisch, photoelektrisch, pneumatisch oder hydraulisch angesteuert sein.

Das Spannungsversorgungssystem 3 kann beispielsweise auch mit einem oder mehreren Spannungsversorgungssystemen 3 eines oder mehrerer weiterer Feuerwehr- oder Rettungsfahrzeug 2 lösbar verbindbar sein. Eine derartige Verbindung kann insbesondere über Kabel, über in Wasserschläuchen geführte Kabel aber auch induktiv hergestellt sein.

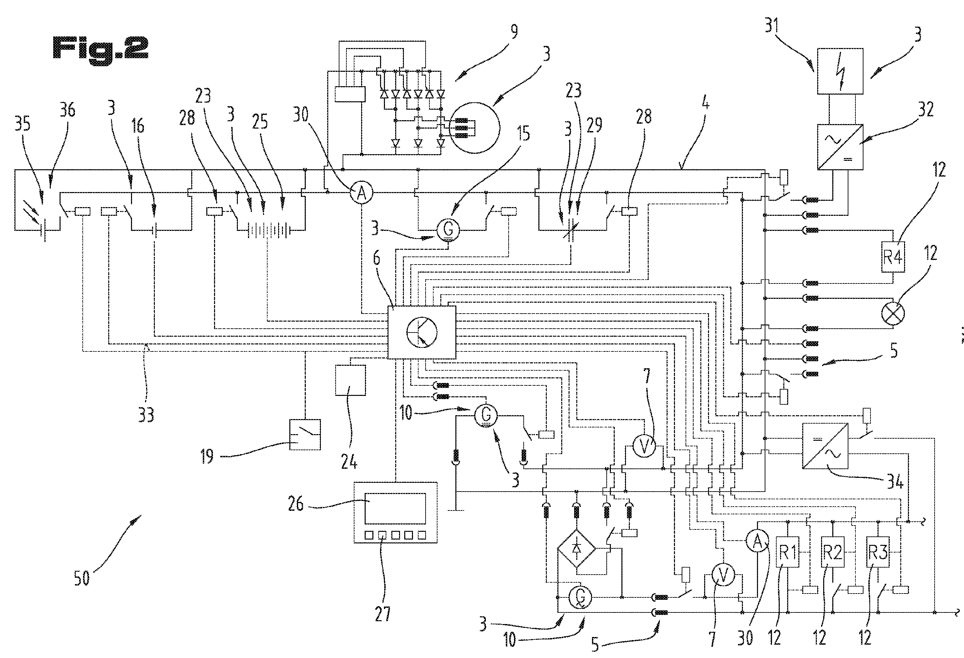

In der Fig. 2 ist eine weitere und gegebenenfalls für sich eigenständige Ausführungsform des Spannungsversorgungssystems 1 bzw. zum Verfahren der Steuerung desselben gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung zu der vorangegangenen Fig. 1 hingewiesen bzw. Bezug genommen.

Wie in Figur 2 dargestellt ist beispielsweise eine Spannungsquelle 3 durch die Steuervorrichtung 6 mit einem Verbraucher 12 über die Verbraucherschnittstelle 5 verbindbar. Es können aber insbesondere mehrere Spannungsquellen 3 durch die Steuervorrichtung 6 mit einem oder mehreren Verbrauchern 12 über die eine oder mehrere Verbraucherschnittstelle 5 verbindbar sein.

Das Spannungsversorgungssystem 50 kann beispielsweise ausschließlich von dem mobilen Stromerzeuger 10 als Spannungsquelle 3 versorgt werden. In dieser Variante kann der Fahrmotor 8 und die damit antriebsverbundene Lichtmaschine 9 abgestellt sein. Der mobile Stromerzeuger kann zur Abgabe unterschiedlicher Spannungen ausgebildet sein. So können beispielsweise fahrzeuginterne Verbraucher 12 und externe Verbraucher, wie Bergungsgeräte, Lichtquellen oder Ladegeräte versorgt werden.

Das Spannungsversorgungssystem 50 kann aber beispielsweise auch gleichzeitig durch den mobilen Stromerzeuger 10 und durch die Lichtmaschine 9 als Spannungsquellen 3 versorgt sein. Eine ausreichende Spannungs- und Stromversorgung von einer Mehrzahl von Verbrauchern 12 oder eines sehr leistungsstarken Verbrauchers kann so umgesetzt werden.

Zumindest eine Spannungsquelle 3 kann beispielsweise zur Abgabe von 230 Volt und 400 Volt oder 120 Volt Spannung ausgebildet ist. Natürlich können auch sonst übliche Spannung mit einer derartigen Vorrichtung zur Verfügung gestellt werden.

Zumindest eine Spannungsquelle 3 kann zum Beispiel gemeinsam mit einem Batterieladegerät 13 oder ohne eines solchen zur Abgabe von 12 Volt, 24 Volt oder 48 Volt Spannung ausgebildet ist. Eine Spannungsquelle 3 kann also neben oder anstatt dem im Feuerwehr- oder Rettungsfahrzeug integrierten Ladesystem eine bestimmte Spannung in der Batterie aufrechterhalten.

Das Spannungsversorgungssystem 50 kann auch mehrere physisch oder schaltungsmäßig, zum Bespiel durch Wechselrichter getrennte elektrische Leitungsnetze 4 umfassen um sowohl Wechselstrom wie auch Gleichstrom herstellen wie auch zur Verfügung stellen zu können.

Der mobile Stromerzeuger 10 kann beispielsweise auch durch eine Brennstoffzelle 16 gebildet sein.

In oder an der verschließbaren Aufnahme 18 kann beispielsweise ein Verschlusssensor 19 angeordnet sein. Dieser kann zur Abgabe eines Signals an die Steuervorrichtung 6 ausgebildet sein, welches eine Unterbrechung des Betriebs oder eine Verhinderung der Betriebsaufnahme eines Stromerzeugers 10 verhindern kann. Natürlich kann die Vorrichtung auch zur Erzeugung eines Freigabesignals ausgebildet sein um den Stromerzeuger 10 neu- oder wieder starten zu können.

Die Steuerung 6 kann beispielsweise sicherstellen, dass der mobile Stromerzeuger 10 nur dann betrieben werden kann wenn der Verschlusssensor 19 der verschließbaren Aufnahme 18 der Steuervorrichtung 6 bestätigt, dass die verschließbare Aufnahme 18 geöffnet ist.

In einer weiteren möglichen Ausführungsvariante kann eine Spannungsquelle 3 durch einen elektrischen Pufferspeicher 23 gebildet sein. Insbesondere kann der Pufferspeicher durch einen Kondensator 29 gebildet sein.

Die Auswahl einer Spannungsquelle 3 zum Betrieb eines Verbrauchers 12 und die Zu- und Wegschaltung einer oder mehrerer Spannungsquelle 3 erfolgt durch die Steuervorrichtung unter Berücksichtigung einer laufenden Messung der Spannung durch die Spannungsmessvorrichtung 7. Eine selektive Verbindung zwischen einzelnen Spannungsquellen 3 und Verbrauchern 12 kann beispielsweise realisiert werden. Spannungsmessvorrichtungen 7 können beispielsweise an unterschiedlichen Stellen im elektrischen Leistungsnetz 4 angeordnet sein. Insbesondere ist die Spannungsmessvorrichtung 7 mit dem Steuergerät 6 verbunden und kann diesem Steuergerät 6 als Sensor dienen.

Die Auswahl einer Spannungsquelle 3 zum Betrieb eines Verbrauchers 12 und die Zu- und Wegschaltung einer Spannungsquelle 3 durch die Steuervorrichtung 6 kann beispielsweise unter Berücksichtigung einer laufenden Messung der Spannung durch die Spannungsmessvorrichtung 7 und unter Berücksichtigung der benötigten Leistung erfolgen. Die benötigte Leistung kann zum Beispiel über in einem Speicher 24 hinterlegten Werten für einzelne Verbraucher 12 durch die Steuervorrichtung 6 abgefragt werden oder durch Eingaben eines Benutzers eingebracht werden. Ebenso können natürlich auch eine oder mehrere Strommessungen über Strommessvorrichtungen 30 erfolgen und in die Steuerung einfließen.

Die Spannungsquelle 3, der Verbraucher 12 und die Steuervorrichtung 6 kann beispielsweise über Bus-Signale, gesteuert werden. Es kann jedoch jegliches System zur Datenübertragung zwischen mehreren Teilnehmern, wie Steuerungen, Quellen und Verbrauchern über einen gemeinsamen Übertragungsweg, bei dem die Teilnehmer nicht an der Datenübertragung zwischen anderen Teilnehmern beteiligt sind verwendet sein. Es können beispielsweise ein CAN-Bus, Feld-Bus, EIB, Bus aber auch Ethernet verwendet werden.

Mit der Steuerung 6 können wie in Fig. 2 dargestellt Schalter 28 verbunden sein. Mittels dieser Schalter 28 können Verbraucher 12 und Spannungsquellen 3 zu- oder weggeschaltet werden.

Sowohl Verbraucher 12 wie auch Spannungsquellen 3 und mobile Stromerzeuger 10 können über Verbraucherschnittstellen 5 und dort beispielsweise angeordneten Kuppelstellen 11 lösbar mit dem Spannungsversorgungssystem verbunden werden. Insbesondere können diese Kuppelstellen 11 auch eine Verbindung der den Steuerleitungen 33 herstellen um so Steuersignale der Steuervorrichtung 6 an Verbraucher 12 wie auch Spannungsquellen 3 und mobile Stromerzeuger 10 weitergeben zu können.

Das Spannungsversorgungssystem 50 kann eine oder mehrere dem oder den Steuergeräten 6 zugeordnete elektronische Speicher 24 zur Speicherung von Daten aufweisen. Insbesondere können Werte, Leistungsdaten, Steuerungslogik und ausführbare Programme zur Steuerung darauf hinterlegt sein.

Das elektrische Leitungsnetz 4 des Spannungsversorgungssystems 1 kann zum Beispiel an externe Stromversorgungsnetze angeschlossen sein, darunter können jedenfalls öffentliche Energienetze, Hausversorgungsnetze, Ladungserhaltungsnetze und Stromtankstellen verstanden werden.

Der Steuerung 6 zugeordnet kann beispielsweise eine Anzeige 26 und/oder eine Bedieneinheit 27 sein, Diese ermöglichen eine Interaktion des Bediener mit dem Spannungsversorgungssystem 50 zur Überwachung, zum Eingriff in die Steuerung oder zur reinen Information.

Zumindest eine Spannungsquelle 3 kann beispielsweise durch eine photovoltaische Energiegewinnungsvorrichtung 36 gebildet sein.

In das Spannungsversorgungssystem 50 können beispielsweise auch Solarzellen 35 oder sonstige photovoltaische Energiegewinnungsvorrichtungen 36 integriert werden. Solche Solarzellen können fix oder beweglich am Feuerwehr- oder Rettungsfahrzeug 2 angeordnet sein. Es ist jedoch ebenso möglich die Solarzellen 35 auf mobilen Vorrichtungen zu befestigen und außerhalb des Feuerwehr- oder Rettungsfahrzeuges 2 anzuordnen. Insbesondere können diese photovoltaischen Energiegewinnungsvorrichtungen 36 im Spannungsversorgungssystem 50 zum Betrieb von Klimatisierungs- oder Kühlvorrichtungen verwendet werden.

Unter einer photovoltaischen Energiegewinnungsvorrichtung 36 ist eine Vorrichtung zu verstehen, die solare Licht- oder Strahlungsenergie in elektrischen Strom umwandelt.

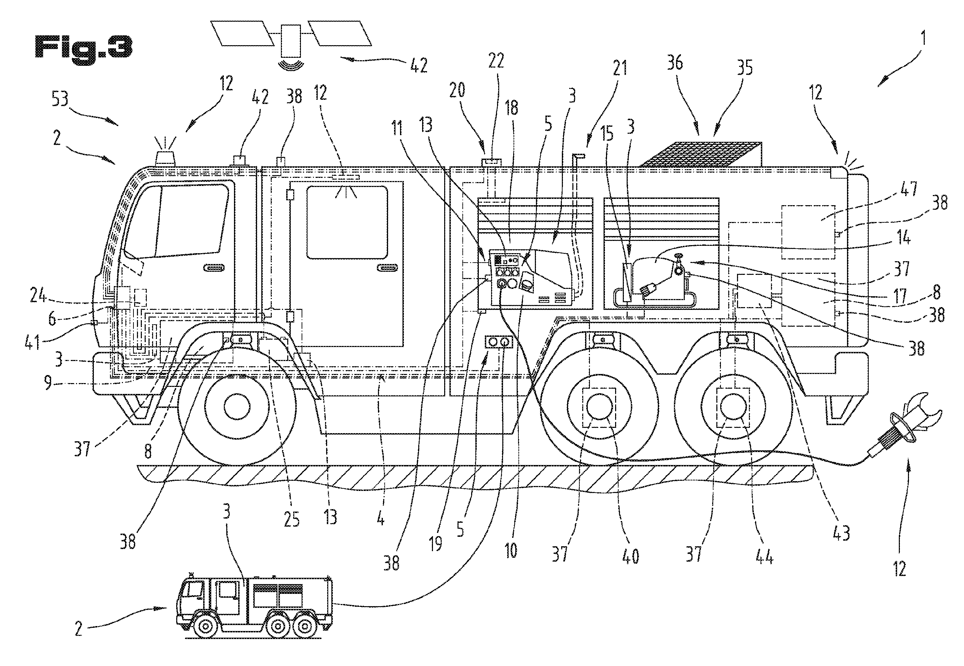

Gemäß Fig. 3 weist ein erfindungsgemäßes Spannungsversorgungs- und Antriebssystem 1 für eine Feuerwehr- oder Rettungsfahrzeug 2 oder Sondernutzfahrzeug 53 zumindest eine Antriebsquelle 37 und mehrere Spannungsquellen 3 die über ein elektrisches Leitungsnetz 4 miteinander verbunden sind, auf. Die Antriebsquellen können wiederum beispielsweise elektrisch oder hydraulisch oder mechanisch mit den Rädern oder anderen mechanisch betriebenen Maschinen wie der Löschwasserpumpe 47 verbunden sein.

Unter dem Begriff Sondernutzfahrzeug sind Nutzfahrzeuge zu verstehen die beispielsweise zur Durchführung von Arbeitseinsätzen, Servicearbeiten, Instandhaltungsarbeiten, Bauarbeiten, Bergungsarbeiten, Lasthebungen dienen oder für den Kommunal, Kanal, oder Reinigungseinsatz Verwendung finden. Zum Beispiel können diese Sondernutzfahrzeuge auch speziell auf die Bedürfnisse des Betriebes abgestimmt sein.

Das Spannungsversorgungs- und Antriebssystem 1 wird beispielsweise aus einem Spannungsversorgungssystem 50 und einem Antriebssystem 49 gebildet. Komponenten des Spannungsversorgungssystems 50 insbesondere Spannungsquellen 3 und Stromerzeuger können auch zur Versorgung Antriebsquellen 37 mit Energie genutzt werden. Ebenso können Geräte des Antriebssystems 49 insbesondere Antriebsquellen 37 wie ein Fahrmotor 8, eine Lichtmaschine 9, ein Hydraulikölmotor 44 zum Antrieb von Stromerzeugungsvorrichtungen wie einem Generator 15 genutzt werden oder direkt Strom erzeugen und in das Spannungsversorgungssystem 50 einleiten.

Zumindest eine der Spannungsquellen 3 ist durch eine Batterie 25 gebildet. Diese Batterie kann zum Beispiel eine reine Starterbatterie wie ein Bleiakkumulator oder andere Akkumulator sein und kleineren Verbrauchern als Spannungsquelle dienen. Aber es ist auch möglich, dass diese als großer Akkumulator vorgesehen ist der auch den Forttrieb des Feuerwehr und Rettungsfahrzeuges 2 oder Sondernutzfahrzeuges 53 über beispielsweise einen oder mehrere Elektromotoren 40 ermöglich. Als Akkumulatoren können bespielhaft Akkumulatoren auf Lithiumbasis wie Lithium-Ionen-Akkus, Lithium-Polymer-Akkus oder Lithium-Luft-Akkumulatoren dienen.

Weiters umfasst das Spannungsversorgungs- und Antriebssystem 1 eine Steuervorrichtung 6, welche beispielsweise durch eine elektrische, elektronische oder eine einen Mikroprozessor aufweisende Steuerung gebildet sein kann. Eine solche Vorrichtung kann beispielsweise Steuer- und oder Regelbefehle ausführen die manuell, aufgrund von in einem oder in mehreren elektronischen Speichern 24 hinterlegten Auslösewerten wie Emissionswerten oder aufgrund logischer Programmierung ausgelöst werden.

Die Steuervorrichtung 6 ist zur Zu- und Wegschaltung einer oder mehrerer Spannungsquellen 3 und/oder einer oder mehrerer Antriebsquellen 37 unter Berücksichtigung zumindest eines Emissionswertes zumindest einer der Spannungsquellen 3 und/oder zumindest einer der Antriebsquellen 37 ausgebildet. Die Steuervorrichtung 6 kann beispielsweise nur Spannungsquellen ein- oder zuschalten oder unterschiedliche Kombinationen aus Spannungsquellen und Antriebsquellen. Ebenso ist es beispielsweise möglich nur bestimmte Kombinationen von Antriebsquellen für unterschiedliche Aufgaben wie die Fortbewegung oder den Antrieb einer Löschwasserpumpe 47 zu nutzen.

Emissionswert ist ein numerischer Wert zur quantitativen Bestimmung einer von einer Maschine ausgehenden Emission. Ein Emissionswert ist einer Emissionsart zuzuordnen. Emissionswerte können vorab beispielsweise im Labor bestimmt werden und in einem Speicher 24 für eine ganz bestimmte Komponente des Spannungsversorgungs- und Antriebssystem 1 des Feuerwehr- und Rettungsfahrzeuges 2 oder Sondernutzfahrzeug 57 oder für eine mit diesem oder in dessen Nahbereich betriebene Maschine konkret hinterlegt werden. Natürlich ist es auch möglich einzelne oder sämtliche Emissionswerte mittels Sensoren 41 zu messen und diese direkt an die Steuervorrichtung 6 zu übertragen und/oder im Speicher zu hinterlegen. Es können beispielsweise unterschiedliche Maßgrößen für Emissionswerte unterschiedlicher Emissionsarten verwendet werden.

Für eine Spannungsquelle 3 oder eine Antriebsquelle 37, die in einer Emissionsart keine Emission verursacht, wird zum Beispiel im Speicher 24 ein Emissionswert von 0 für diese Emissionsart hinterlegt.

Aus den im Speicher 24 hinterlegten Emissionswerten kann sich zum Beispiel eine Tabelle ergeben in welcher einer Spannungsquelle 3 oder einer Antriebsquelle 37 für die unterschiedlichen Emissionsarten die jeweiligen ermittelten und hinterlegten oder gemessenen Emissionswerte zugeordnet sind.

Die Berücksichtigung des Emissionswertes kann beispielsweise in der Form erfolgen, dass zur Zu- und Wegschaltung einer oder mehrerer Spannungsquellen 3 oder Antriebsquellen 37 zumindest ein in einem Speicher 24 hinterlegten Emissionswert zu einer Spannungsquelle 3 oder Antriebsquelle 37 von der Steuervorrichtung 6 aufgerufen wird und dann zum Beispiel jene Spannungsquelle 3 oder Antriebsquelle 37 zu - oder eingeschaltet wird, die die geringste Emission mit sich bringt. Es ist beispielsweise aber auch möglich, dass zur Zu- und Wegschaltung einer oder mehrerer Spannungsquellen 3 und/oder Antriebsquellen 37 ein von einem Emissionssensor 38 ermittelter Emissionswert dient. Dieser kann an die Steuervorrichtung 6 vom Emissionssensor 38 nach Ermittlung übertragen werden oder von der Steuervorrichtung 6 abgefragt werden entweder beispielsweise am Emissionssensor 38 direkt oder an einem Speicher 24, wo die Emissionswerte zwischengespeichert werden können.

Der Emissionssensor 38 kann zur Messung wie Emissionsarten wie Lärm, Kohlenstoffmonoxid, Kohlenstoffdioxid, Feinstaub, Ruß, Schwefeldioxid, Stickoxid, Benzol, Methan, Wärme und Rauch ausgebildet sein.

Der Emissionssensor 38 kann beispielsweise nach physikalischen, chemischen, biochemischen oder elektrischen Messprinzipien funktionieren. Beispiele solcher Messmethoden sind: Resistiv, Chemo-Resistiv, Optisch, Akustisch, Molekülmasse, Diffusionsverhalten; Reaktivität, Oxidierbarkeit, Reduzierbarkeit, Kapazitiv, Potentiometrisch, Amperometrisch, Thermisch, Thermochemisch, Thermisch-physikalisch, Gravimetrisch, Biochemisch. Als Emissionssensor 38 können für diese genannten Messmethoden marktübliche Sensoren Verwendung finden.

Der Begriff Emissionsart definiert die Art der Emissionen die von dem Spannungsversorgungs- und Antriebssystem 1 des Feuerwehr- und Rettungsfahrzeuges 2 oder Sondernutzfahrzeug 57 und/oder dessen Komponenten und/oder sonstigem im Nahbereich des Feuerwehr-und Rettungsfahrzeuges 2 oder des Sondernutzfahrzeuges 57 betriebenen Maschinen ausgehen, ausgetragen oder ausgestoßen werden. Beispielsweise Abgas, Lärm, Kohlenstoffmonoxid, Kohlenstoffdioxid, Feinstaub, Ruß, Schwefeldioxid, Stickoxid, Benzol, Methan, Wärme, Vibration, Partikel und Rauch zu Emissionsarten.

Weiters kann zumindest ein Sensor 41 zur Ermittlung von Betriebsumgebungsbedingungen vorgesehen sein.

Betriebsumgebungsbedingungen sind beispielsweise die Temperatur am Einsatzort, die Sauerstoffkonzentration, Gaskonzentration im Nahfeld des Feuerwehr- und Rettungsfahrzeuges 2 oder des Sondernutzfahrzeuges 57, die Lichtverhältnisse, die Rauchkonzentration, die Kohlenstoffmonoxidkonzentration, die Kohlenstoffdioxidkonzentration, die Methankonzentration, die Konzentration von flüchtigen organischen Komponenten, der Luftdruck, der Wind, die Windrichtung, die Luftfeuchtigkeit, die Radioaktivität, die Konzentration von chemischen Stoffen in der Luft oder am Boden. Betriebsumgebungsbedingungen können beispielsweise mit einem Sensor 41 ermittelt bzw. gemessen werden.

Die Steuervorrichtung 6 kann nun beispielsweise zur Zu- und Wegschaltung einer oder mehrerer Spannungsquellen 3 und/oder Antriebsquellen 37 abhängig von den Betriebsumgebungsbedingungen ausgebildet sein. Auch kann zum Beispiel basierend auf den gemessenen Betriebsumgebungsbedingungen ein Betriebsmodus durch die Steuervorrichtung 6 gewählt oder dem Benutzer zur Auswahl vorgeschlagen werden. Dies kann auch allein oder ergänzend durch ein geographisches Positionserkennungssystem (42) wie GPS, Galileo, Glonass, Funkortungssystemen, Mobilfunkortungssystemen, Trägheitsnavigation zur Ermittlung der Betriebsumgebung geschehen. Diese Information kann in einer Variante durch elektronisch abrufbare Kartendaten oder sonstige elektronisch verfügbaren Informationen zum Ort oder Einsatzobjekt ergänzt werden.

Betriebsumgebung definiert dabei das Umfeld des Einsatzraumes des Feuerwehr-und Rettungsfahrzeuges 2 oder des Sondernutzfahrzeuges 57. Beispielsweise die geografische Lage des Ortes, die Höhenlage, die Bebauung der Umgebung, städtisches oder ländliches Umfeld, Straßenzustand, potentielle Gefahren durch das Vorhandensein von Chemischen Stoffen, Gefahrgütern, Gasen oder brennbaren Materialen. Beispielsweise stellt der Einsatz eines Feuerwehr- und Rettungsfahrzeuges 2 oder Sondernutzfahrzeuges 57 in einem Tunnel oder einer überdachten Garage oder gar in einem Gebäude eine andere Betriebsumgebung dar als das freie Gelände. Ebenso ist zum Beispiel auch ein Naturschutzgebiet als besondere Betriebsumgebung zu werten. Zum Beispiel kann eine Bestimmung der Betriebsumgebung durch elektronische Karteninformationen, über geographisches Positionserkennung, Sensoren 41 zur Erfassung von Betriebsumgebungsbedingungen, über elektronische übermittelte Daten aus der Einsatzzentrale, elektronisch abgegriffene Datenbankinformationen wie zu einem Gefahrgutregister oder zu Datenbanken des Straßenerhalters oder aber durch Eingabe oder Auswahl von Standard-Betriebsumgebungen durch einen Bediener erfolgen.

Die Steuervorrichtung 6 kann aber auch in einer Variante zur Zu- und Wegschaltung einer oder mehrerer Spannungsquellen 3 und/oder Antriebsquellen 37 abhängig von einem Betriebsmodus ausgebildet sein.

Der Sensor 41 kann beispielsweise nach physikalischen, chemischen, biochemischen oder elektrischen Messprinzipien funktionieren. Beispiele solcher Messmethoden sind: Resistiv, Chemo-Resistiv, Optisch, Akustisch, Molekülmasse, Diffusionsverhalten; Reaktivität, Oxidierbarkeit, Reduzierbarkeit, Kapazitiv, Potentiometrisch, Amperometrisch, Thermisch, Thermochemisch, Thermisch-physikalisch, Gravimetrisch, Biochemisch. Als Sensor 41 können für diese genannten Messmethoden marktübliche Sensoren Verwendung finden.

Ein Betriebsmodus ermöglicht die Kombination von unterschiedlichen Einstellungen, Limitationen, Emissionsgrenzwerte oder Nutzungsmöglichkeiten der Komponenten des Spannungsversorgungs- und Antriebssystems 2. Ein Betriebsmodus kann zum Beispiel aus mehreren fix im Speicher 24 hinterlegten Betriebsmodi durch den Bediener zum Beispiel über die Bedieneinheit 27 ausgewählt werden. Es ist aber genauso möglich, dass die Steuervorrichtung 6 basierend auf den Messwerten der Sensoren 41 und/oder der Emissionssensoren 38 und/oder geographischen Positionsinformationen aus dem geographischen Positionserkennungssystem 42 automatisch einen Betriebsmodus wählt oder individuell Einstellung für einen weiteren neuen solchen Betriebsmodus zusammenstellt und aktiviert. Der gewählte Betriebsmodus kann dem Bediener und oder Fahrer auf einer Anzeige 26 angezeigt werden. Es können weiters Informationen zu den gewählten Einstellungen und ausgewählten Spannungsquellen 3 und/oder Antriebsquellen 37 dargestellt sein. Um in einer Notsituation schnell handlungsfähig zu sein, kann der gewählte Betriebsmodus vom Bediener oder Fahrer manuell verändert werden. Es kann daher zum Beispiel eine "Override" Funktion dazu dienen einen Notfallbetriebsmodus auswählen zu können der es beispielsweise ermöglicht sämtliche Spannungsquellen 3 und Antriebsquellen 37 gleichzeitig zu betreiben.

Beispielsweise ist es auch denkbar zur schnelleren Fortbewegung im Einsatzfall beispielsweise in einem Flughafenlöschfahrzeug einen Betriebsmodus vorzusehen der zur Erzielung einer größeren Beschleunigung oder Endgeschwindigkeit viele oder sämtliche zur Antriebsunterstützung verwendbare Spannungsquellen und/oder Antriebsquellen nutzbar macht.

Zumindest eine weitere Spannungsquelle 3 kann durch einen aus dem Feuerwehr- oder Rettungsfahrzeug 2 oder Sondernutzfahrzeug 57 entnehmbaren und unabhängig von dem elektrischen Leitungsnetz 4 betreibbaren Stromerzeuger 10 gebildet sein. Der Emissionssensor 38 kann beispielsweise auch an oder nahe dem Stromerzeuger (10) angeordnet sein. Dasselbe gilt für die Anordnung eines Emissionssensors auf sonstigen Spannungsquellen- und/oder Antriebsquellen.

Einer oder mehrere Fahrmotoren (8) zum Antrieb des Feuerwehr- oder Rettungsfahrzeug (2) oder Sondernutzfahrzeuges 53 können in diesem angeordnet werden.

Unter Fahrmotor 8 ist eine Antriebsquelle 37 zu verstehen welche alleine oder gemeinsam mit weiteren Antriebsquellen 37 in der Lage ist das Feuerwehr- oder Rettungsfahrzeug 2 oder Sondernutzfahrzeug 53 fortzubewegen. Ein Fahrmotor 8 kann beispielsweise durch eine Verbrennungskraftmaschine 39, wie einen Verbrennungsmotor insbesondere Dieselmotor, Benzin-, oder Gasmotor gebildet sein, aber auch zum Beispiel durch einen Elektromotor 40, Hydraulikölmotor 44, Hybridmotor oder eine Gasturbine.

Zu den weiteren in Figur 3 gezeigten Merkmalen ist auf die Figurenbeschreibung der Figur 1 zu verweisen.

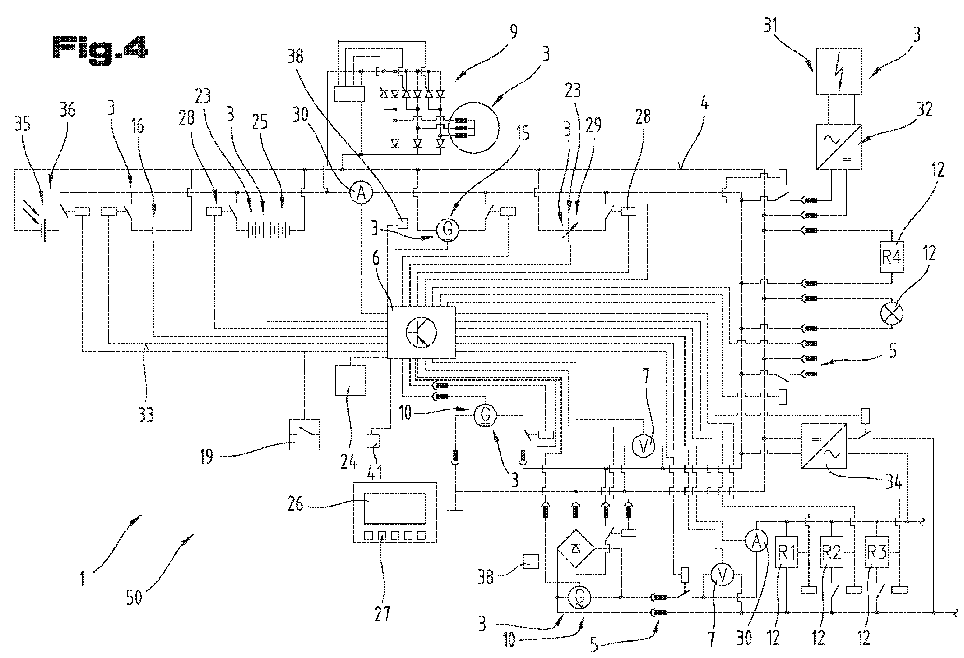

In der Fig. 4 ist eine weitere und gegebenenfalls für sich eigenständige Ausführungsform des Spannungsversorgungs- und Antriebssystems 1 bzw. zum Verfahren der Steuerung desselben gezeigt, wobei wiederum für gleiche Teile gleiche Bezugszeichen bzw. Bauteilbezeichnungen wie in den vorangegangenen Figurenverwendet werden. Um unnötige Wiederholungen zu vermeiden, wird auf die detaillierte Beschreibung zu den vorangegangenen Figuren hingewiesen bzw. Bezug genommen.

Wie in Figur 4 dargestellt ist beispielsweise mit der Steuerungsvorrichtung, die auch Regelungsaufgaben übernehmen kann, ein Sensor 41 verbunden. Abhängig von den durch diesen Sensor 41 ermittelten Betriebsumgebungsbedingungen können Steuer- und/oder Regelaufgaben durch die Steuerungsvorrichtung 6 ausgeführt werden.

Die Steuervorrichtung 6 kann beispielsweise zumindest einen der folgenden Verfahrensschritte ausführen bzw. mit anderen Geräten dazu kommunizieren:
- Ermittlung eines Leistungsbedarfs und/oder Spannungsbedarfes
- Ermittlung oder Aufruf von Emissionswerten der Spannungsquellen 3 und/oder der Antriebsquellen 37
- Berechnung der Summe der Emissionswerte von Kombinationen von Spannungsquellen 3 und/oder der Antriebsquellen 37 je Emissionsart
- Ermittlung jener Kombination von Spannungsquellen 3 und/oder Antriebsquellen 37 welche hinsichtlich einer Emissionsart die kleinste Summe der Emissionswerte ergibt
- einschalten, zuschalten oder wegschalten von Spannungsquellen 3 und/oder der Antriebsquellen 37 entsprechend der zuvor ermittelten Kombination von Spannungsquellen 3 und/oder Antriebsquellen 37 abhängig von einem Betriebsmodus.

Die Steuervorrichtung 6 kann beispielsweise die Spannungsquellen 3 oder Antriebsquellen 37 aus mehreren Spannungsquellen 3 oder Antriebsquellen 37 so kombinieren und einschalten, zuschalten oder wegschalten, dass die Summe der Emissionswerte aller zugeschalteten Spannungsquellen 3 und/oder Antriebsquellen 37 für die benötigte Leistung minimal ist. Die benötigte Leistung kann sich beispielhaft aus einer laufenden Messung der aktuell benötigten Systemleistung für unterschiedliche Anforderungen wie mechanischen, elektrischen oder hydraulischen ergeben. Es können aber auch zukünftige Leistungsabnahmewahrscheinlichkeiten oder Trends von der Steuervorrichtung 6 errechnet werden. Ebenso können zum Beispiel für bestimmte Betriebsmodi unterschiedliche Standard-Leistungsanforderungen im Speicher 24 hinterlegt sein. Der Emissionswert ist beispielsweise dann minimal, wenn für die Erfüllung der Leistungsanforderung durch den Betrieb unterschiedlicher Spannungsquellen 3 und/oder Antriebsquellen 37 zumindest hinsichtlich einer Emissionsart oder aller mehrerer Emissionsarten die geringste Menge an Emissionen freigesetzt wird.

Die Steuervorrichtung 6 kann beispielsweise abhängig von einem wählbaren oder ermittelten Betriebsmodus die Spannungsquellen 3 oder Antriebsquellen 37 aus mehreren Spannungsquellen 3 oder Antriebsquellen 37 so kombinieren bzw. zum Betrieb auswählen und einschalten, zuschalten oder wegschalten, dass die Summe der Emissionswerte aller zugeschalteten Spannungsquellen 3 und/oder Antriebsquellen 37 hinsichtlich zumindest einer Emissionsart oder mehrerer Emissionsarten wie beispielsweise Lärm, Kohlenstoffmonoxid, Kohlenstoffdioxid, Feinstaub, Ruß, Schwefeldioxid, Stickoxid, Wärme oder Rauch für die benötigte Leistung und/oder zu erwartende Leistungsanforderung minimal ist.

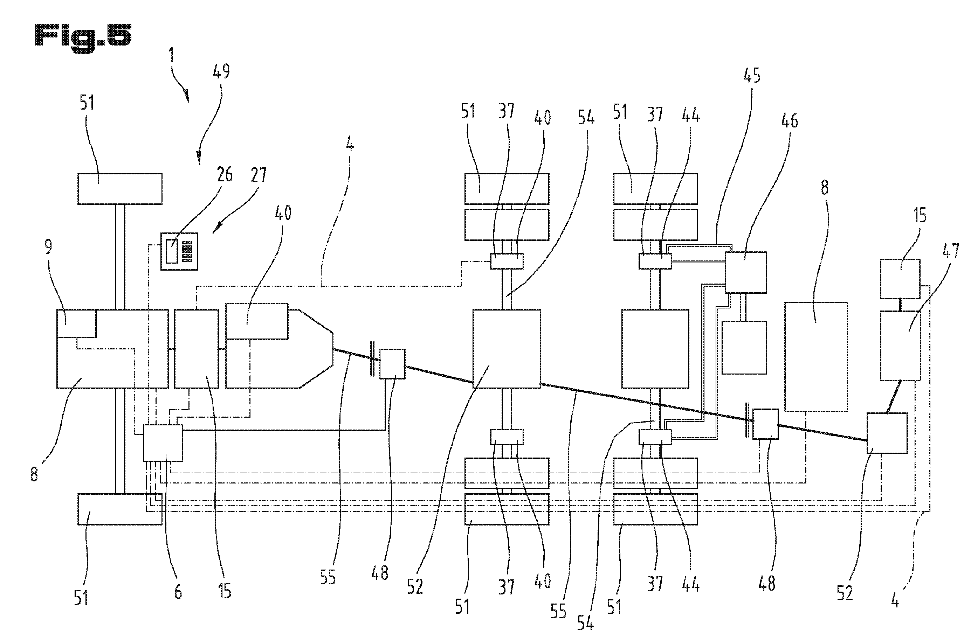

In der Fig. 5 ist eine weitere und gegebenenfalls für sich eigenständige Ausführungsform eines Antriebssystems 49 bzw. zum Verfahren der Steuerung desselben gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung zu den vorangegangenen Figuren hingewiesen bzw. Bezug genommen.

Wie in Figur 5 gezeigt ist, kann das Antriebssystem 49 zumindest einen Fahrmotor und zumindest eine weitere Antriebsquelle 37 umfassen. Die Kraftübertragung bzw. Energieübertragung von den Antriebsquellen 37 zu den Rädern kann mittels mechanischen, hydraulischen oder elektrischen Verbindungen geschehen.

Es kann beispielsweise ein Hydraulikantrieb in das Feuerwehr- oder Rettungsfahrzeug 2 oder Sondernutzfahrzeug 53 integriert sein. Ein solcher Hydraulikantrieb kann zum Beispiel zumindest jeweils eine Hydraulikölpumpe 47, einen Hydrauliköltank 46, Hydraulikleitungen 45 sowie einen Hydraulikmotor 44 umfassen.

Es kann im Feuerwehr- oder Rettungsfahrzeug 2 oder Sondernutzfahrzeug 53 auch eine Löschwasserpumpe 47 mit/oder ohne eigenen Motor integriert sein. Diese Löschwasserpumpe 47 kann über Wellen 55 zum Beispiel von einem Fahrmotor 8 oder einer sonstigen Antriebsquelle 37 angetrieben sein. Eine Welle 55 kann zum Beispiel durch eine Kupplung 48 trennbar beispielsweise mit einer Antriebsache 54 oder direkt mit einem sonstigen Gerät antriebsverbunden sein.

Einzelne Räder 51 oder Zwillingsräder und/oder eine Antriebsachse 54 und/oder eine Hydraulikpumpe 43 können mit einem Elektromotor 40 kraftschlüssig verbunden sein.

Die Steuerungsvorrichtung 6 kann beispielsweise gemeinsam oder getrennt von den Spannungsversorgungssystem 50 betrieben werden. Zur Beschreibung der mittels der Steuervorrichtung 6 realisierbaren Verfahren bzw. Verfahrensschritte sei auf die Figurenbeschreibungen zu den Figuren 1 bis 4 verwiesen. Wobei sich die dort beschrieben Schritte auch alleinig auf die Kombination bzw. Ein-, Zu- und/oder Wegschaltung von Antriebsquellen 37 verstanden werden können.

Die Ausführungsbeispiele zeigen mögliche Ausführungsvarianten des Spannungsversorgungssystems 50 bzw. zum Verfahren zur Steuerung desselben, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Spannungsversorgungssystems 2. diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Spannungsversorgungssystem - | 31 | Externes Energieversorgungsnetz |
| | und Antriebssystem | 32 | Gleichrichter |
| 2 | Feuerwehr- oder Rettungsfahrzeug | 33 | Steuerleitung |
| 3 | Spannungsquelle | 34 | Wechselrichter |
| 4 | elektrisches Leitungsnetz | 35 | Solarzellen |
| 5 | Verbraucherschnittstelle | | |
| | | 36 | Photovoltaische Energiegewin- |
| 6 | Steuervorrichtung | | nungsvorrichtung |
| 7 | Spannungsmessvorrichtung | 37 | Antriebsquelle |
| 8 | Fahrmotor | 38 | Emissionssensor |
| 9 | Lichtmaschine | 39 | Verbrennungskraftmaschine |
| 10 | Mobiler Stromerzeuger | 40 | Elektromotor |
| | | | |
| 11 | Kuppelstelle | 41 | Sensor |
| 12 | Verbraucher | 42 | geographisches Positionserken- |
| 13 | B atterieladegerät | | nungssystem |
| 14 | Antrieb | 43 | Hydraulikölpumpe |
| 15 | Generator | 44 | Hydraulikölmotor |
| | | 45 | Hydraulikleitung |
| 16 | Brennstoffzelle | | |
| 17 | Tragkraftspritze | 46 | Hydrauliköltank |
| 18 | Aufnahme | 47 | Löschwasserpumpe |
| 19 | Verschlusssensor | 48 | Kupplung |
| 20 | Kühlvorrichtung | 49 | Antriebssystem |
| | | 50 | Spannungsversorgungssystem |
| 21 | Abgasableitungsvorrichtung | | |
| 22 | Luftzuführvorrichtung | 51 | Rad |
| 23 | elektrischer Pufferspeicher | 52 | Getriebe |
| 24 | Speicher | 53 | Sondernutzfahrzeug |
| 25 | Batterie | 54 | Antriebsachse |
| | | 55 | Welle |
| 26 | Anzeige | | |
| 27 | Bedieneinheit | | |
| 28 | Schalter | | |
| 29 | Kondensator | | |
| 30 | Strommessvorrichtung | | |

## Patentansprüche

1. Spannungsversorgungs- und Antriebssystem (1) für ein Feuerwehr- oder Rettungsfahrzeug (2) oder Sondernutzfahrzeug (53) mit zumindest einer Antriebsquelle (37) und mit mehreren Spannungsquellen (3) die über ein elektrisches Leitungsnetz (4) miteinander verbunden sind und einer Steuervorrichtung (6), wobei zumindest eine der Spannungsquellen (3) durch eine Batterie (25) gebildet ist, **dadurch gekennzeichnet, dass** die Steuervorrichtung (6) zur Zu- und Wegschaltung einer oder mehrerer Spannungsquellen (3) und/oder einer oder mehrerer Antriebsquellen (37) unter Berücksichtigung zumindest eines Emissionswertes zumindest einer der Spannungsquellen (3) und/oder zumindest einer der Antriebsquellen (37) ausgebildet ist.

2. Spannungsversorgungs- und Antriebssystem (1) nach Anspruch 1, **dadurch gekennzeichnet, dass** die Steuervorrichtung (6) zur Zu- und Wegschaltung einer oder mehrerer Spannungsquellen (3) oder Antriebsquellen (37) unter Berücksichtigung zumindest eines in einem Speicher (24) hinterlegten Emissionswertes ausgebildet ist.

3. Spannungsversorgungs- und Antriebssystem (1) nach Anspruch 1 oder 2, **dadurch gekennzeichnet, dass** die Steuervorrichtung (6) zur Zu- und Wegschaltung einer oder mehrerer Spannungsquellen (3) und/oder Antriebsquellen (37) unter Berücksichtigung zumindest eines von einem Emissionssensor (38) ermittelten Emissionswertes ausgebildet ist.

4. Spannungsversorgungs- und Antriebssystem (1) nach einem der Ansprüche 1 bis 3 **dadurch gekennzeichnet, dass** der Emissionssensor (38) zur Messung zumindest einer der Emissionsarten wie Lärm, Kohlenstoffmonoxid, Kohlenstoffdioxid, Feinstaub, Ruß, Schwefeldioxid, Stickoxid, Benzol, Methan, Wärme und Rauch ausgebildet ist.

5. Spannungsversorgungs- und Antriebssystem (1) nach einem der Ansprüche 1 bis 4 **dadurch gekennzeichnet, dass** zumindest ein Sensor (41) zur Ermittlung von Betriebsumgebungsbedingungen vorgesehen ist.

6. Spannungsversorgungs- und Antriebssystem (1) nach einem der Ansprüche 1 bis 5 **dadurch gekennzeichnet, dass** zumindest ein geographisches Positionserkennungssystem (42) zur Ermittlung der Betriebsumgebung vorgesehen ist.

7. Spannungsversorgungs- und Antriebssystem (1) nach einem der Ansprüche 1 bis 6 **dadurch gekennzeichnet, dass** die Steuervorrichtung (6) zur Zu- und Wegschaltung einer oder mehrerer Spannungsquellen (3) und/oder Antriebsquellen (37) abhängig von einem Betriebsmodus ausgebildet ist.

8. Spannungsversorgungs- und Antriebssystem (1) nach einem der Ansprüche 1 bis 6 **dadurch gekennzeichnet, dass** die Steuervorrichtung (6) zur Zu- und Wegschaltung einer oder mehrerer Spannungsquellen (3) und/oder Antriebsquellen (37) abhängig von den Betriebsumgebungsbedingungen ausgebildet ist.

9. Spannungsversorgungs- und Antriebssystem (1) nach einem der Ansprüche 1 bis 8 **dadurch gekennzeichnet, dass** zumindest eine weitere Spannungsquelle (3) durch einen aus dem Feuerwehr- oder Rettungsfahrzeug (2) entnehmbaren und unabhängig von dem elektrischen Leitungsnetz (4) betreibbaren Stromerzeuger (10) gebildet ist.

10. Spannungsversorgungs- und Antriebssystem (1) nach einem der Ansprüche 1 bis 9 **dadurch gekennzeichnet, dass** zumindest ein weiterer Fahrmotor (8) zum Antrieb des Feuerwehr- oder Rettungsfahrzeug (2) in diesem angeordnet ist.

11. Spannungsversorgungs- und Antriebssystem (1) nach Anspruch 10 **dadurch gekennzeichnet, dass** der zumindest eine weitere Fahrmotor (8) durch eine Verbrennungskraftmaschine (39) oder durch einen Elektromotor (40) gebildet ist.

12. Spannungsversorgungs- und Antriebssystem (1) nach einem der Ansprüche 1 bis 11 **dadurch gekennzeichnet, dass** der Emissionssensor (38) an dem Stromerzeuger (10) angeordnet ist.

13. Verfahren zur Steuerung eines Spannungsversorgungs- und Antriebssystem (1) für ein Feuerwehr- oder Rettungsfahrzeug (2) oder Sondernutzfahrzeug (53) mit zumindest einer Antriebsquelle (37) und mehreren Spannungsquellen (3) die über ein elektrisches Leitungsnetz (4) miteinander verbunden sind **dadurch gekennzeichnet, dass** eine Auswahl einer Spannungsquelle (3) zum Betrieb eines Verbrauchers (12) und/oder der Antriebsquelle (37) und die Ein-, Zu- und Wegschaltung einer Spannungsquelle (3) und/oder einer Antriebsquelle (37) durch eine Steuervorrichtung (6) unter Berücksichtigung zumindest jeweils eines Emissionswertes der Spannungsquelle (3) und/oder der Antriebsquelle (37) erfolgt.

14. Verfahren zur Steuerung eines Spannungsversorgungs- und Antriebssystem (1) nach Anspruch 13 **dadurch gekennzeichnet, dass** der zumindest eine Emissionswert im Speicher (24) hinterlegt ist und durch die Steuervorrichtung (6) abgefragt wird.

15. Verfahren zur Steuerung eines Spannungsversorgungs- und Antriebssystem (1) nach einem der Ansprüche 13 oder 14 **dadurch gekennzeichnet, dass** der zumindest eine Emissionswert von einem Emissionssensor (38) ermittelt und an die Steuervorrichtung (6) übertragen wird.

16. Verfahren zur Steuerung eines Spannungsversorgungs- und Antriebssystem (1) nach einem der Ansprüche 13 bis 15 **dadurch gekennzeichnet, dass** die Steuervorrichtung (6) die Spannungsquellen (3) oder Antriebsquellen (37) aus mehreren Spannungsquellen (3) oder Antriebsquellen (37) so kombiniert und einschaltet, zuschaltet oder wegschaltet, dass die Summe der Emissionswerte aller zugeschalteten Spannungsquellen (3) und/oder Antriebsquellen (37) für die benötigte Leistung minimal ist.

17. Verfahren zur Steuerung eines Spannungsversorgungs- und Antriebssystem (1) nach einem der Ansprüche 13 bis 16 **dadurch gekennzeichnet, dass** die Steuervorrichtung (6) abhängig von einem wählbaren oder ermittelten Betriebsmodus die Spannungsquellen (3) oder Antriebsquellen (37) aus mehreren Spannungsquellen (3) oder Antriebsquellen (37) so kombiniert und einschaltet, zuschaltet oder wegschaltet, dass die Summe der Emissionswerte aller zugeschalteten Spannungsquellen (3) und/oder Antriebsquellen (37) hinsichtlich zumindest einer Emissionsart wie beispielsweise Lärm, Kohlenstoffmonoxid, Kohlenstoffdioxid, Feinstaub, Ruß, Schwefeldioxid, Stickoxid, Wärme oder Rauch für die benötigte Leistung und/oder zu erwartende Leistungsanforderung minimal ist.

18. Verfahren zur Steuerung eines Spannungsversorgungs- und Antriebssystem (1) nach einem der Ansprüche 13 bis 17 umfassend die Schritte:
- Ermittlung eines Leistungsbedarfs und/oder Spannungsbedarfes
- Ermittlung oder Aufruf von Emissionswerten der Spannungsquellen (3) und/oder der Antriebsquellen (37)
- Berechnung der Summe der Emissionswerte von Kombinationen von Spannungsquellen (3) und/oder der Antriebsquellen (37) je Emissionsart
- Ermittlung jener Kombination von Spannungsquellen (3) und/oder Antriebsquellen (37) welche hinsichtlich einer Emissionsart die kleinste Summe der Emissionswerte ergibt
- einschalten, zuschalten oder wegschalten von Spannungsquellen (3) und/oder der Antriebsquellen (37) entsprechend der zuvor ermittelten Kombination von Spannungsquellen (3) und/oder Antriebsquellen (37) abhängig von einem Betriebsmodus.

## Claims

1. Voltage supply and drive system (1) for a fire service vehicle or rescue vehicle (2) or special utility vehicle (53), having at least one drive source (37) and having multiple voltage sources (3) that are connected to one another by way of an electrical line network (4), and a control apparatus (6), wherein at least one of the voltage sources (3) is formed by a battery (25), **characterized in that** the control apparatus (6) is configured for connecting or disconnecting one or more voltage sources (3) and/or one or more drive sources (37), taking into consideration at least one emission value of at least one of the voltage sources (3) and/or at least one of the drive sources (37).

2. Voltage supply and drive system (1) according to claim 1, **characterized in that** the control apparatus (6) is configured for connecting and disconnecting one or more voltage sources (3) or drive sources (37), taking into consideration at least one emission value stored in a memory (24).

3. Voltage supply and drive system (1) according to claim 1 or 2, **characterized in that** the control apparatus (6) is configured for connecting and disconnecting one or more voltage sources (3) and/or drive sources (37), taking into consideration at least one emission value determined by an emissions sensor (38).

4. Voltage supply and drive system (1) according to one of claims 1 to 3, **characterized in that** the emissions sensor (38) is configured for measuring at least one of the emission types such as noise, carbon monoxide, carbon dioxide, fine dust, soot, sulphur dioxide, nitrogen oxide, benzene, methane, heat, and smoke.

5. Voltage supply and drive system (1) according to one of claims 1 to 4, **characterized in that** at least one sensor (41) for determining conditions of the operating environment is provided.

6. Voltage supply and drive system (1) according to one of claims 1 to 5, **characterized in that** at least one geographic position recognition system (42) for determining the operating environment is provided.

7. Voltage supply and drive system (1) according to one of claims 1 to 6, **characterized in that** the control apparatus (6) is configured for connecting and disconnecting one or more voltage sources (3) and/or drive sources (37) as a function of an operating mode.

8. Voltage supply and drive system (1) according to one of claims 1 to 6, **characterized in that** the control apparatus (6) is configured for connecting and disconnecting one or more voltage sources (3) or drive sources (37) as a function of the conditions of the operating environment.

9. Voltage supply and drive system (1) according to one of claims 1 to 8, **characterized in that** at least one further voltage source (3) is formed by an electricity generator (10) that can be removed from the fire service vehicle or rescue vehicle (2) and operated independent of the electrical line network (4).

10. Voltage supply and drive system (1) according to one of claims 1 to 9, **characterized in that** at least one further travel motor (8) for driving the fire service vehicle or rescue vehicle (2) is disposed in this vehicle.

11. Voltage supply and drive system (1) according to claim 10, **characterized in that** the at least one further travel motor (8) is formed by an internal combustion engine (39) or by an electric motor (40).

12. Voltage supply and drive system (1) according to one of claims 1 to 11, **characterized in that** the emissions sensor (38) is disposed on the electricity generator (10).

13. Method for controlling a voltage supply and drive system (1) for a fire service vehicle or rescue vehicle (2) or special utility vehicle (53), having at least one drive source (37) and multiple voltage sources (3) that are connected to one another by way of an electrical line network (4), **characterized in that** selecting a voltage source (3) for operating a consumer (12) and/or the drive source (37), and turning on, connecting and disconnecting a voltage source (3) and/or a drive source (37) takes place by means of a control apparatus (6), taking into consideration at least one emission value of the voltage source (3) and/or of the drive source (37), in each instance.

14. Method for controlling a voltage supply and drive system (1) according to claim 13, **characterized in that** the at least one emission value is stored in the memory (24) and queried by the control apparatus (6).

15. Method for controlling a voltage supply and drive system (1) according to one of claims 13 or 14,**characterized in that** the at least one emission value is determined by an emissions sensor (38) and transmitted to the control apparatus (6).

16. Method for controlling a voltage supply and drive system (1) according to one of claims 13 to 15,**characterized in that** the control apparatus (6) combines and turns on, connects, or disconnects the voltage sources (3) or drive sources (37) from multiple voltage sources (3) or drive sources (37) in such a manner that the sum of the emission values of all the connected voltage sources (3) and/or drive sources (37) is minimal for the required power.

17. Method for controlling a voltage supply and drive system (1) according to one of claims 13 to 16,**characterized in that** the control apparatus (6) combines the voltage sources (3) or drive sources (37) from multiple voltage sources (3) or drive sources (37), as a function of the selectable or determined operating mode, and turns them on, connects and disconnects them in such a manner that the sum of the emission values of all the connected voltage sources (3) and/or drive sources (37) is minimal for the required power and/or power demand to be expected, with regard to at least one emission type such as, for example, noise, carbon monoxide, carbon dioxide, fine dust, soot, sulphur dioxide, nitrogen oxide, heat or smoke.

18. Method for controlling a voltage supply and drive system (1) according to one of claims 13 to 17, comprising the steps:
- determining a power demand and/or voltage demand,
- determining or calling up emission values of the voltage sources (3) and/or of the drive sources (37),
- calculating the sum of the emission values of combinations of voltage sources (3) and/or of the drive sources (37) by emission type,
- determining the specific combination of voltage sources (3) and/or drive sources (37) that results in the smallest sum of the emission values with regard to an emission type,
- turning on, connecting or disconnecting voltage sources (3) and/or drive sources (37) in accordance with the previously determined combination of voltage sources (3) and/or drive sources (37) as a function of an operating mode.

## Revendications

1. Système d'alimentation en tension et d'entraînement (1) pour un véhicule de lutte contre l'incendie ou de secours (2) ou un véhicule utilitaire particulier (53) avec au moins une source d'entraînement (37) et avec plusieurs sources de tension (3) qui sont reliées entre elles par l'intermédiaire d'un réseau de puissance électrique (4) et un dispositif de commande (6), au moins une des sources de tension (3) étant constituée d'une batterie (25), **caractérisé en ce que** le dispositif de commande (6) est conçu pour le branchement et le débranchement d'une ou plus sources de tension (3) et/ou d'une des plusieurs sources d'entraînement (37) en tenant compte d'au moins une valeur d'émission d'au moins une des sources de tension (3) et/ou d'au moins une des sources d'entraînement (37).

2. Système d'alimentation en tension et d'entraînement (1) selon la revendication 1, **caractérisé en ce que** le dispositif de commande (6) est conçu pour le branchement et le débranchement d'une ou plusieurs sources de tension (3) ou sources d'entraînement (37) en tenant compte d'au moins une valeur d'émission enregistrée dans une mémoire (24).

3. Système d'alimentation en tension et d'entraînement (1) selon la revendication 1 ou 2, **caractérisé en ce que** le dispositif de commande (6) est conçu pour le branchement et le débranchement d'une ou plusieurs sources de tension (3) ou sources d'entraînement (37) en tenant compte d'au moins une valeur d'émission déterminée par un capteur d'émission (38).

4. Système d'alimentation en tension et d'entraînement (1) selon l'une des revendications 1 à 3, **caractérisé en ce que** le capteur d'émission (38) est conçu pour la mesure d'un des types d'émissions comme le bruit, le monoxyde de carbone, le dioxyde de carbone, les particules fines, la suie, le dioxyde de soufre, l'oxyde d'azote, le benzol, le méthane, la chaleur et la fumée.

5. Système d'alimentation en tension et d'entraînement (1) selon l'une des revendications 1 à 4, **caractérisé en ce qu'**au moins un capteur (41) est prévu pour la détermination de conditions environnementales de fonctionnement.

6. Système d'alimentation en tension et d'entraînement (1) selon l'une des revendications 1 à 5, **caractérisé en ce qu'**au moins un système de détection de position géographique (42) est prévu pour la détermination de l'environnement de fonctionnement.

7. Système d'alimentation en tension et d'entraînement (1) selon l'une des revendications 1 à 6, **caractérisé en ce que** le dispositif de commande (6) est conçu pour le branchement et le débranchement d'une ou plusieurs sources de tension (3) et/ou de sources d'entraînement (37) en fonction d'un mode de fonctionnement.

8. Système d'alimentation en tension et d'entraînement (1) selon l'une des revendications 1 à 6, **caractérisé en ce que** le dispositif de commande (6) est conçu pour le branchement et le débranchement d'une ou plusieurs sources de tension (3) et/ou de sources d'entraînement (37) en fonction des conditions environnementales de fonctionnement.

9. Système d'alimentation en tension et d'entraînement (1) selon l'une des revendications 1 à 8, **caractérisé en ce qu'**au moins une autre source de tension (3) est constituée d'un générateur de courant (10) pouvant être extrait du véhicule de lutte contre l'incendie et de secours (2) et pouvant fonctionner indépendamment du réseau de puissance électrique (4).

10. Système d'alimentation en tension et d'entraînement (1) selon l'une des revendications 1 à 9, **caractérisé en ce qu'**au moins un autre moteur (8) pour l'entraînement du véhicule de lutte contre l'incendie et de secours (2) est disposé dans celui-ci.

11. Système d'alimentation en tension et d'entraînement (1) selon la revendication 10, **caractérisé en ce que** l'au moins un autre moteur (8) est constitué d'une machine à combustion interne (39) ou d'un moteur électrique (40).

12. Système d'alimentation en tension et d'entraînement (1) selon l'une des revendications 1 à 11, **caractérisé en ce que** le capteur d'émissions (38) est disposé sur le générateur de courant (10).

13. Procédé de commande d'un système d'alimentation en tension et d'entraînement (1) pour un véhicule de lutte contre l'incendie et de secours (2) ou un véhicule utilitaire particulier (53) avec au moins une source de tension (37) et plusieurs sources de tension (3), qui sont reliées entre elles par l'intermédiaire d'un réseau de puissance électrique (4), **caractérisé en ce qu'**une sélection d'une source de tension (3) pour le fonctionnement d'un consommateur (12) et/ou de la source d'entraînement (37) et l'activation, le branchement et le débranchement d'une source de tension (3) et/ou d'une source d'entraînement (37) par un dispositif de commande (6) sont effectués en tenant compte d'au moins une valeur d'émission de la source de tension (3) et/ou de la source d'entraînement (37).

14. Procédé de commande d'un système d'alimentation en tension et d'entraînement (1) selon la revendication 13, **caractérisé en ce que** l'au moins une valeur d'émission est enregistrée dans la mémoire (24) et est interrogée par le dispositif de commande (6).

15. Procédé de commande d'un système d'alimentation en tension et d'entraînement (1) selon l'une des revendications 13 ou 14, **caractérisé en ce que** l'au moins une valeur d'émission est déterminée par un capteur d'émission (38) et est transmise au dispositif de commande (6).

16. Procédé de commande d'un système d'alimentation en tension et d'entraînement (1) selon l'une des revendications 13 à 15, **caractérisé en ce que** le dispositif de commande (6) combine et active, branche ou débranche les sources de tension (3) ou les sources d'entraînement (37) constituées de plusieurs sources de tension (3) ou les sources d'entraînement (37) de façon à ce que la somme des valeurs d'émissions de toutes les sources de tension (3) et/ou sources d'entraînement (37) branchées soit minimale pour la puissance nécessaire.

17. Procédé de commande d'un système d'alimentation en tension et d'entraînement (1) selon l'une des revendications 13 à 16, **caractérisé en ce que** le dispositif de commande (6) combine et active, branche ou débranche, en fonction d'un mode de fonctionnement sélectionnable ou déterminé, les sources de tension (3) ou les sources d'entraînement (37) constituées de plusieurs sources de tension (3) ou les sources d'entraînement (37) de façon à ce que la somme des valeurs d'émissions de toutes les sources de tension (3) et/ou sources d'entraînement (37), en ce qui concerne au moins la valeur d'émission comme le bruit, le monoxyde de carbone, le dioxyde de carbone, les particules fines, la suie, le dioxyde de soufre, l'oxyde d'azote, le benzol, le méthane, la chaleur ou la fumée soit minimale pour la puissance nécessaire et/ou sur la consommation de puissance prévue.

18. Procédé de commande d'un système d'alimentation en tension et d'entraînement (1) selon l'une des revendications 13 à 17, comprenant les étapes suivantes :
- détermination d'un besoin en puissance et/ou d'un besoin en tension
- détermination d'un appel de valeurs d'émissions des sources de tension (3) et/ou des sources d'entraînement (37)
- calcul de la somme des valeurs d'émission de combinaisons de sources de tension (3) et/ou des sources d'entraînement (37) pour chaque type d'émission
- détermination de la combinaison de sources de tension (3) et/ou de sources d'entraînement (37) qui donne la somme de valeurs d'émission la plus faible en ce qui concerne un type d'émission
- activation, branchement ou débranchement de sources de tension (3) et/ou de sources d'entraînement (37) en fonction de la combinaison déterminée préalablement de sources de tension (3) et/ou de sources d'entraînement (37) en fonction d'un mode de fonctionnement.
